# EUROPÄISCHE PATENTANMELDUNG

(11) **EP 2 221 136 A1**
(43) Veröffentlichungstag der Anmeldung: **25.08.2010**
(21) Anmeldenummer: 09100135.4
(22) Anmeldetag: 20.02.2009
(51) Int. Cl.: B23K 1/08, B23K 3/08, G05D 21/00, G01N 25/48

(54) **Lötanlage und Verfahren zur Erkennung von einem Lot enthaltenen Verunreinigungen**

(71) Anmelder: Endress+Hauser GmbH+Co. KG, 79689 Maulburg (DE)
(72) Erfinder: Birgel, Dietmar, 79650 Schopfheim (DE); Glatz, Franz, 79106 Freiburg (DE)
(74) Vertreter: Andres, Angelika Maria

(57) **Zusammenfassung**

Es ist eine Lötanlage mit einem Lotbad (1), das im Lötbetrieb ein flüssiges Lot (3) enthält, das Verunreinigungen enthalten kann, die sich im Lötbetrieb in dem zunächst reinen Lot (L) angereichert haben und ein Verfahren zur Erkennung von Verunreinigungen in einem Lot (3) beschrieben, mit der bzw. mit dem Verunreinigungen im Lot (3) des Lötbads (1) auf einfache Weise zeitnah vor Ort erkannt werden können, indem die Temperatur des Lots (3) während eines Abkühl- oder eines Aufheizvorganges in einem Temperaturbereich gemessen wird, indem ein Phasenübergang des Lots (3) stattfindet, bei dem mindestens ein mengenmäßig größter Teil des Lots (3) erstarrt oder schmilzt, und der zeitlichen Verlauf der gemessenen Temperatur (T(t)) und/oder eine daraus abgeleitete Kenngröße (K) mit dem zeitlichen Verlauf einer mit dem reinen Lot (L) aufgenommenen Referenzkurve (T_{R}(t)) und/oder der entsprechenden Referenzkenngröße (K_{R}) des reinen Lotes (L) verglichen wird, eine gegebenenfalls bestehende Abweichung (Δ, Δ') bestimmt wird, und das Lot (3) als verunreinigt erkannt wird, wenn eine Abweichung (Δ, Δ') besteht.

## Beschreibung

Die Erfindung betrifft eine Lötanlage mit einem Lotbad, das ein Lot enthält, in dem sich im Lötbetrieb Verunreinigungen anreichern können, ein Verfahren zum Betrieb dieser Anlage, und ein Verfahren zur Erkennung von in einem reinen Lot enthaltenen Verunreinigungen.

Löten ist ein thermisches Verfahren zum stoffschlüssigen Fügen von Werkstoffen, dass insb. in der Elektrotechnik und der Elektronik weit verbreitet ist. In industriellen Herstellungsprozessen werden z.B. elektronische Bauteile auf Leiterplatten aufgelötet. Bekannte Lötverfahren sind das Wellenlöten, und das Selektivlöten.

Beim Wellenlöten werden elektronische Baugruppen, wie z.B. Leiterplatten, mit elektronischen Bauteilen bestückt und über eine Lotwelle gefahren. Die Lotwelle wird dadurch erzeugt, dass in einem Lotbad bereitstehendes flüssiges Lot durch einen Spalt gepumpt wird.

Das Selektivlöten ist eine Variante des Wellenlötens, bei der nur definierte Teilbereiche der Baugruppe mit dem Lot in Berührung kommen. Dies geschieht beispielsweise in dem in einem Lotbad bereitstehendes flüssiges Lot durch kleine Düsen gepumpt wird, deren Abmessung an die Abmessungen der zu lötenden Flächen angepasst sind.

Bei der Verwendung von Lötbädern besteht die Gefahr, dass sich Verunreinigungen in einem anfänglich reinen Lot anreichern. Dies geschieht beispielsweise, indem kleinere Mengen von in der Baugruppe enthaltenem Materialien während des Lötvorgangs von dem flüssigen Lot aufgenommen werden, und sich im Lötbad anreichern. Mögliche Quellen für Verunreinigungen sind dabei z.B. Bauteilmetallisierungen sowie beispielsweise mit Zinn/Blei vorbelotete Leiterplatten.

Verunreinigungen bewirken eine Veränderung der physikalischen und chemischen Eigenschaften des Lotes und führen in der Regel zu einer Verschlechterung der mit dem Lot erzielbaren Qualität der Lötverbindungen. Außerdem können sie, je nach Material der Verunreinigung eine Gefahr für Mensch und Umwelt darstellen.

Zum Schutz der Umwelt und von Personen ist man heute bemüht, Lote einzusetzen, die keine Schwermetalle, wie z.B. Blei oder Quecksilber enthalten.

In diese Richtung zielt auch die RoHS-Richtlinie (Restriction of Certain Hazardous Substances) der Europäischen Union, die den Einsatz bestimmter gefährlicher Stoffe, wie z.B. Blei, in der Elektroindustrie verbietet. Dabei werden Grenzwerte für die Konzentrationen der einzelnen potentiell gefährlichen Stoffe vorgegeben, die von den Herstellern einzuhalten sind. Hieraus ergeben sich entsprechende Grenzwerte für die Konzentration dieser Stoffe im Lot des Lotbads, die nicht überschritten werden dürfen.

Verunreinigungen des Lotbades mit potentiell gefährlichen Stoffen lassen sich jedoch nicht gänzlich ausschließen. Auch beim Einsatz bleifreier Lote kann es mit der Zeit zu einer Anreicherung von Blei im Lotbad kommen. Dies geschieht beispielsweise, indem kleinere Mengen von in der Baugruppe enthaltenem Blei während des Lötvorgangs von dem flüssigen Lot aufgenommen werden, und sich im Lötbad anreichern. Mögliche Bleiquellen sind dabei z.B. bleihaltige Bauteilmetallisierungen sowie mit Zinn/Blei vorbelotete Leiterplatten. Leiterplatten werden in der Regel für konkrete Anwendungen speziell angefertigt. Bleihaltige Metallisierungen der Leiterplatten können daher hier gezielt ausgeschlossen werden. Die darauf zu montierenden Bauteile sind dagegen in der Regel standardisiert und werden kurzfristig von unterschiedlichen zum Teil wechselnden Herstellern bezogen. Bleihaltige Metallisierungen von Bauteilen können daher nicht immer mit Sicherheit ausgeschlossen werden.

Um Verunreinigungen im Lot und deren nachteilige Auswirkungen auf Mensch und Umwelt und/oder auf die Qualität der Lötverbindungen vorzubeugen, werden Lotbäder in regelmäßigen Abständen ausgetauscht. Jeder Austausch ist jedoch mit erheblichem Zeit- und Kostenaufwand verbunden.

Die Geschwindigkeit mit der sich Verunreinigungen im Lotbad ansammeln hängt von den verwendeten Bauteilen ab, und kann daher stark variieren. Entsprechend muss das Lotbad entweder sehr häufig gewechselt werden, oder in Kauf genommen werden, dass die Qualität der Lötverbindung mit der zunehmenden Anreicherung von Verunreinigungen im Lötbad abnimmt. Letzteres kann unter Umständen dazu führen, das bei einer überraschend schnellen Anreicherung von Verunreinigungen viel Ausschuss produziert wird.

Es gibt Analyseverfahren, mit denen die chemische Zusammensetzung des Lotes im Lotbad anhand von Proben genau festgestellt werden können. Derartige Analysen erfordern jedoch sehr aufwendige Apparaturen, und können daher in der Regel nicht vor Ort durchgeführt werden. Die Proben werden daher häufig zur Analyse an entsprechende Labore verschickt. Dabei kann es sein, dass das Analyseergebnis erst nach mehreren Tagen vorliegt.

Dies ist besonders kritisch, wenn vorgegebene Grenzwerte für die Konzentration einzelner Stoffe eingehalten werden müssen. In dem Fall kann ein Analyseergebnis, dass das Überschreiten eines vorgegebenen Grenzwertes feststellt, bedeuten, dass alle in der Zwischenzeit in dem Lötbad gelöteten Komponenten nicht auf den Markt gebracht werden dürfen.

Es ist eine Aufgabe der Erfindung eine Lötanlage und ein Verfahren zur Erkennung von Verunreinigungen in einem Lot anzugeben, mit der bzw. mit dem Verunreinigungen, die sich im Lot anreichern können, auf einfache Weise zeitnah vor Ort erkannt werden können.

Hierzu besteht die Erfindung in einer Lötanlage mit
- einem Lotbad, das im Lötbetrieb ein flüssiges Lot enthält, das Verunreinigungen enthalten kann, die sich im Lötbetrieb in dem zunächst reinen Lot angereichert haben, und
   einer Vorrichtung zur Erkennung dieser Verunreinigungen, mit
   -- einem Temperatursensor, der dazu dient, die Temperatur des Lots während eines Abkühl- oder eines Aufheizvorganges in einem Temperaturbereich zu messen, indem ein Phasenübergang des Lots stattfindet, bei dem mindestens ein mengenmäßig größter Teil des Lots erstarrt oder schmilzt, und
   -- einer Auswerteeinheit, die den zeitlichen Verlauf der gemessenen Temperatur und/oder eine daraus abgeleitete Kenngröße mit dem zeitlichen Verlauf einer mit dem reinen Lot unter den gleichen Bedingungen aufgenommenen Referenzkurve, die den zeitlichen Verlauf der Temperatur des reinen Lots während des Abkühl- oder des Aufheizvorganges in diesem Temperaturbereich, indem auch der Phasenübergang des reinen Lots stattfindet wiedergibt, und/oder der entsprechenden Referenzkenngröße des reinen Lotes vergleicht, eine gegebenenfalls bestehende Abweichung bestimmt, und das Lot als verunreinigt erkennt, wenn eine Abweichung besteht.

Gemäß einer ersten Ausgestaltung weist die Vorrichtung zur Erkennung der Verunreinigungen eine Entnahmevorrichtung zur Entnahme einer vorgegebenen Menge flüssigen Lotes aus dem Lotbad und einen Behälter zur Aufnahme des entnommenen Lots auf, und der Temperatursensor ist derart angeordnet, dass er die Temperatur des Lots in diesem Behälter misst.

Gemäß einer anderen Ausgestaltung ist der der Temperatursensor derart angeordnet, dass er die Temperatur des Lots im Lotbad misst.

Gemäß einer Weiterbildung
- ist die Kenngröße diejenige Temperatur, bei der der zeitliche Verlauf der gemessenen Temperatur einen plateauförmigen Abschnitt aufweist,
- die Referenzkenngröße ist die Schmelztemperatur des reinen Lots , und
- die Abweichung ist eine Differenz zwischen der Kenngröße und der Referenzkenngröße.

Weiter besteht die Erfindung in einem Verfahren zur Erkennung von in einem Lot enthaltenen Verunreinigungen, bei dem
- ein zeitlicher Verlauf einer Temperatur des Lotes während eines Abkühl-oder eines Aufheizvorganges in einem Temperaturbereich gemessen wird, indem ein Phasenübergang des Lots stattfindet, bei dem mindestens ein mengenmäßig größter Teil des Lots erstarrt oder schmilzt, und
- der zeitlichen Verlauf der gemessenen Temperatur und/oder eine daraus abgeleitete Kenngröße mit dem zeitlichen Verlauf einer mit dem reinen Lot aufgenommenen Referenzkurve, und/oder der entsprechenden Referenzkenngröße des reinen Lotes verglichen wird, eine gegebenenfalls bestehende Abweichung bestimmt wird, und
- das Lot als verunreinigt erkannt wird, wenn der Vergleich eine Abweichung ergibt.

Gemäß einer Weiterbildung des Verfahrens
- ist die Kenngröße diejenige Temperatur, bei der der zeitliche Verlauf der gemessenen Temperatur einen plateauförmigen Abschnitt aufweist,
- die Referenzkenngröße ist die Schmelztemperatur des reinen Lots, und
- die Abweichung ist eine Differenz zwischen der Kenngröße und der Referenzkenngröße.

Weiter besteht die Erfindung in einem Verfahren zum Betrieb einer erfindungsgemäßen Lötanlage, bei dem
- das Lotbad bei der Inbetriebnahme mit dem reinen Lot befüllt wird,
- mittels der Vorrichtung zur Erkennung der Verunreinigungen der zeitliche Verlauf der Temperatur des reinen Lotes während eines Abkühl- oder eines Aufheizvorganges in einem Temperaturbereich gemessen wird, indem ein Phasenübergang des reinen Lotes stattfindet, und
- der zeitliche Verlauf der Temperatur als Referenzkurve in einem der Auswerteeinheit zugänglichen Speicher abgespeichert wird, und/oder
- aus dem zeitlichen Verlauf der Temperatur eine Kenngröße des reinen Lots abgeleitet und als Referenzkenngröße des reinen Lots in einem der Auswerteeinheit zugänglichen Speicher abgespeichert wird, Gemäß einer Weiterbildung des letztgenannten Verfahrens ausgewechselt, wenn die Abweichung einen vorgegebenen Grenzwert überschreitet. Weiter besteht die Erfindung in einer Lötanlage mit
- einem Lotbad, das im Lötbetrieb ein flüssiges Lot enthält, das eine Verunreinigung aus einem vorbekannten Stoff enthalten kann,
   -- der sich im Lötbetrieb in dem zunächst reinen Lot angereichert hat, und
   -- der eine mit zunehmendem Verunreinigungsgrad stetig wachsende Veränderung des zeitlichen Verlaufs der Temperatur des Lot während eines Abkühl- oder eines Aufheizvorganges in einem Temperaturbereich, indem ein Phasenübergang des Lots stattfindet, bei dem mindestens ein mengenmäßig größter Teil des Lots erstarrt oder schmilzt, bewirkt, und
- einer Vorrichtung zur Erkennung dieser Verunreinigungen, mit
   -- einem Temperatursensor, der dazu dient, die Temperatur des Lots während eines Abkühl- oder eines Aufheizvorganges in einem Temperaturbereich zu messen, indem ein Phasenübergang des Lots stattfindet, bei dem mindestens ein mengenmäßig größter Teil des Lots erstarrt oder schmilzt, und
   -- einer Auswerteeinheit,
      --- die den zeitlichen Verlauf der gemessenen Temperatur oder eine daraus abgeleitete Kenngröße mit dem zeitlichen Verlauf von Referenzkurven, die den zeitlichen Verlauf der Temperatur von mindestens zwei Referenzloten während des gleichen Abkühl- oder Aufheizvorganges in dem Temperaturbereich, in dem auch die Phasenübergänge der Referenzlote stattfinden, wiedergeben, und/oder aus den Referenzkurven abgeleiteten Referenzkenngrößen vergleicht,
      --- wobei ein Referenzlot das reine Lot ist, und alle weiteren Referenzlote Lote mit bekanntem Verunreinigungsgrad sind, die aus dem reinen Lot durch eine Zugabe einer bekannten Menge des vorbekannten Stoffs hergestellt wurden, und
   -- die anhand des Vergleichs eine vom Verunreinigungsgrad des Lotes abhängige Abweichung ableitet und einer weiteren Auswertung, Verarbeitung und/oder Anzeige zur Verfügung stellt.

Weiter besteht die Erfindung in einem Verfahren zur Erkennung einer in einem reinen Lot enthaltenen Verunreinigung aus einem vorbekannten Stoff, der eine mit zunehmendem Verunreinigungsgrad stetig wachsende Veränderung des zeitlichen Verlaufs der Temperatur des Lot während eines Abkühl- oder eines Aufheizvorganges in einem Temperaturbereich, indem ein Phasenübergang des Lots stattfindet, bei dem mindestens ein mengenmäßig größter Teil des Lots erstarrt oder schmilzt, bewirkt, bei dem
- ein zeitlicher Verlauf einer Temperatur des Lotes während eines Abkühl-oder eines Aufheizvorganges in einem Temperaturbereich gemessen wird, indem ein Phasenübergang des Lots stattfindet, bei dem mindestens ein mengenmäßig größter Teil des Lots erstarrt oder schmilzt, und
- der zeitlichen Verlauf der gemessenen Temperatur oder eine daraus abgeleitete Kenngröße mit dem zeitlichen Verlauf von Referenzkurven, die den zeitlichen Verlauf der Temperatur von mindestens zwei Referenzloten während des gleichen Abkühl- oder Aufheizvorganges in dem Temperaturbereich, in dem auch die Phasenübergänge der Referenzlote stattfinden, wiedergeben, und/oder aus den Referenzkurven abgeleiteten Referenzkenngrößen verglichen wird,
   --- wobei ein Referenzlot das reine Lot ist, und alle weiteren Referenzlote Lote mit bekanntem Verunreinigungsgrad sind, die aus dem reinen Lot durch eine Zugabe einer bekannten Menge des vorbekannten Stoffs hergestellt wurden, und
      -- anhand des Vergleichs eine vom Verunreinigungsgrad des Lotes abhängige Abweichung abgeleitet wird.

Weiter besteht die Erfindung in einem Verfahren zur Erkennung von in einem Lot angereicherten Verunreinigungen, bei dem
- eine Schmelztemperatur des Lots gemessen wird, bei der zumindest ein mengenmäßig größter Teil des Lots erstarrt bzw. schmilzt,
- eine Differenz zwischen der gemessenen Schmelztemperatur und der Schmelztemperatur des reinen Lots gebildet wird, und
- das Lot als verunreinigt erkannt wird, wenn die Differenz einen vorgegebenen Grenzwert überschreitet.

Ein Vorteil der Erfindung besteht darin, dass die Zeitintervalle zwischen zwei Badwechseln nun an den tatsächlichen Bedarf angepasst werden können. Das Lotbad wird nur dann gewechselt, wenn dies aufgrund von Verunreinigungen wirklich erforderlich ist. Hierdurch werden unter Umständen erhebliche Kosten eingespart. Gleichzeitig ist eine gleich bleibend gute Qualität des Lotbades gewährleistet, bei der zuverlässig hochwertige Lötverbindengen hergestellt werden können. Entsprechend reduzieren sich Ausschusskosten erheblich.

Ein weiterer Vorteil besteht darin, dass eine Verunreinigung des Lotes mit potentiell gefährlichen Materialien auch dann erkannt wird, wenn sie sich nicht unmittelbar auf die Qualität der mit dem verunreinigten Lot erzielbaren Lötverbindung auswirkt.

Weiterhin bietet die Erfindung den Vorteil, dass die Verunreinigungen unmittelbar vor Ort erkannt werden können, und ein Maß hierfür anhand der abgeleiteten Abweichung zeitnah zur Verfügung steht.

Die Erfindung und weitere Vorteile werden nun anhand der Figuren der Zeichnung, in denen zwei Ausführungsbeispiele dargestellt sind, näher erläutert; gleiche Teile sind in den Figuren mit gleichen Bezugszeichen versehen.

Fig. 1 zeigt schematisch ein erstes Ausführungsbeispiel einer erfindungsgemäßen Lötanlage, mit einem Temperatursensor, der eine Temperatur des Lotes im Lotbad misst;

Fig. 2 zeigt schematisch ein erstes Ausführungsbeispiel einer erfindungsgemäßen Lötanlage, mit einer Vorrichtung zur Entnahme von flüssigen Lotmengen;

Fig. 3 zeigt den zeitlichen Verlaut der Temperatur eines reinen Lotes und zwei weiterer Lote während eines Abkühlvorgangs;

Fig. 4 zeigt einen aus der Lötanlage entnehmbaren Behälter zur Aufnahme einer vorgegebenen Menge Lotes; und

Fig. 5 zeigt den zeitlichen Verlauf der Temperatur von mehreren Referenzloten während eines Abkühlvorgangs.

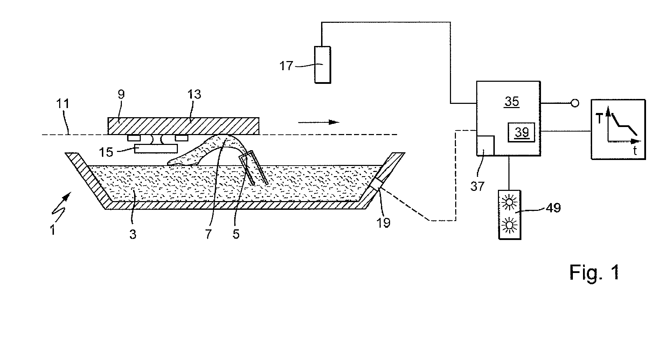

In Fig. 1 ist schematisch ein erstes Ausführungsbeispiel einer erfindungsgemäßen Lötanlage dargestellt. Sie weist ein Lotbad 1 auf, in dem sich im Lötbetrieb flüssiges Lot 3 befindet. Das flüssige Lot 3 wird im Lötbetrieb durch eine aus dem Lotbad 1 herausragende Lotführung 5 herausgepumpt. Beim klassischen Wellenlöten ist die Lotführung 5 beispielsweise ein breiter Spalt, beim Selektivlöten beispielsweise eine Düse. Hierdurch entsteht über dem Flüssigkeitsspiegel des Lotes 3 im Lotbad 1 eine Lotwelle 7, über die die zu lötenden Baugruppen 9 mittels einer Baugruppenführung 11 geführt werden. Die exemplarisch dargestellte Baugruppe 9 umfasst eine Leiterplatte 13 und ein elektronisches Bauteil 15. Die Baugruppenführung 11 ist in Fig. 1 lediglich in Form einer gestrichelten Linie angedeutet.

In dem im Lotbad 1 enthaltenen Lot 3 können Verunreinigungen enthalten sein, die sich im Lötbetrieb wie eingangs beschrieben in dem zunächst reinen Lot L angereichert haben. Erfindungsgemäß weist die Lötanlage eine Vorrichtung zur Erkennung dieser Verunreinigungen auf. Diese umfasst einen Temperatursensor 17, der dazu dient, die Temperatur des Lotes 3 während eines Abkühl- oder eines Aufheizvorganges in einem Temperaturbereich zu messen, indem ein Phasenübergang des Lotes 3 stattfindet. Mit diesem Phasenübergang ist nachfolgend im Bezug auf die Erfindung immer derjenige Phasenübergang gemeint, bei dem das gesamte Lot oder ein mengenmäßig größter Teil des Lotes erstarrt bzw. schmilzt.

In der in Fig. 1 dargestellten Ausführungsform ist der Temperatursensor 17 derart angeordnet, dass er die Temperatur T des Lotes 3 im Lotbad 1 während des Phasenübergangs misst. Hierzu eignet sich zum Beispiel ein über dem Lotbad 1 angebrachter Infrarot-Sensor. Diese Variante ist in Fig. 1 dargestellt. Alternativ kann die Temperaturmessung auch mittels eines durch eine Außenwand des Lotbades 1 hindurch in das Lotbad 1 eingeführten Temperatursensors 19 erfolgen. Diese Variante ist in Fig. 1 ebenfalls dargestellt.

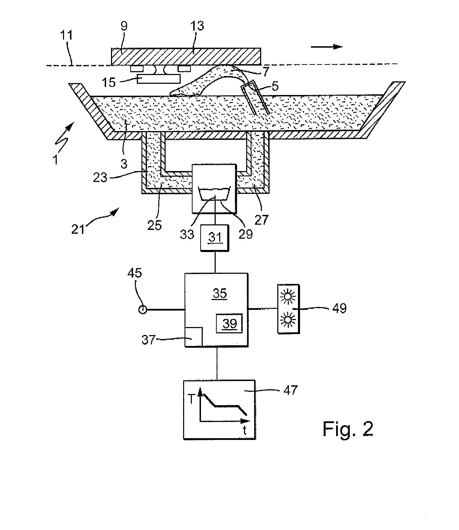

Die Messung des zeitlichen Verlaufs der Temperatur T(t) des Lots 3 während des Phasenüberganges muss jedoch nicht zwingend im Lotbad 1 vorgenommen werden. Alternativ hierzu kann die Vorrichtung zur Erkennung der Verunreinigungen eine Entnahmevorrichtung 21 aufweisen, die dazu dient eine vorgegebenen Menge flüssigen Lotes 3 aus dem Lotbad 1 zu entnehmen. Dies ist in Fig. 2 dargestellt. Die Entnahmevorrichtung 21 umfasst einen unterhalb des Lotbades 1 angeordneten Bypass 23, der über eine Zuleitung 25 und eine Ableitung 27 an den Innenraum des Lotbads 1 angeschlossen ist. In den Bypass 23 ist ein in Fig. 2 lediglich schematisch dargestellter Behälter 29, z.B. ein Tiegel, eingesetzt, der zur Aufnahme der vorgegebenen Lotmenge dient. Analog zu dem in Fig. 1 dargestellten Ausführungsbeispiel ist hier ein Temperatursensor 31 vorgesehen, der derart angeordnet ist, dass er die Temperatur T des Lotes 3 in diesem Behälter 29 während des Phasenübergangs misst. Der hier dargestellte Temperatursensor 31 umfasst hierzu einen in den Behälter 29 hineinragenden Fühler 33.

Des Weiteren umfasst die Vorrichtung zur Erkennung der Verunreinigungen eine Auswerteeinheit 35, die den zeitlichen Verlauf der während des Phasenübergangs gemessenen Temperatur T(t) und/oder eine daraus abgeleitete Kenngröße K mit dem zeitlichen Verlauf einer mit dem reinen Lot aufgenommenen Referenzkurve T_{R}(t), oder der entsprechenden Referenzkenngröße K_{R} des reinen Lotes L vergleicht und anhand des Vergleichs eine gegebenenfalls bestehende Abweichung Δ bestimmt. Besteht eine solche Abweichung Δ, so wird das Lot 3 als verunreinigt erkannt.

Dabei wird die Tatsache ausgenutzt, dass der zeitliche Verlauf der Temperatur T(t) des Lotes 3 während eines Abkühlvorgangs bzw. während eines Aufheizvorganges im Bereich des Phasenübergangs sehr empfindlich von der Zusammensetzung des Lotes 3 abhängt. Bereits geringfügige Veränderungen der Zusammensetzung, wie sie durch Verunreinigungen entstehen können, führen in der Regel zu einem deutlich geänderten Temperaturverhalten. Selbst geringfügige Verunreinigungsgrade, z.B. in der Größenordnung von 0,1 Atom %, können zu einer deutlichen messbaren Veränderung des zeitlichen Verlaufs der Temperatur T(t) des Lotes 3 während des Phasenübergangs führen. Dies gilt sowohl für Verunreinigungen mit Materialien, die im reinen Lot L nicht enthalten sind, als auch für Verunreinigungen mit Materialien, die im reinen Lot L in einer vorgegebenen Menge bereits enthalten sind.

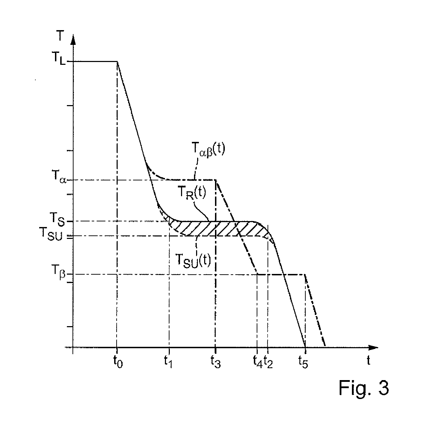

Fig. 3 zeigt ein Beispiel des zeitlichen Verlaufs der Temperatur T_{R}(t) eines reinen Lotes L in Abhängigkeit von der Zeit während des Phasenübergangs. Dieser zeitliche Verlauf bildet die Referenzkurve T_{R}(t). Zu Beginn der Messung ist das Lot L flüssig und weist eine Temperatur T_{L} auf, die der Temperatur des Lotes 3 im Lotbad 1 während des Lötbetriebes entspricht. Ab dem Zeitpunkt t₀ kühlt das Lot L selbsttätig ab. Dabei ist es beispielsweise der umgebenden Raumtemperatur ausgesetzt und wird sich selbst überlassen, d.h. es wird weder von außen beheizt noch aktiv gekühlt. Die Temperatur T des Lotes L nimmt nun bis zum Erreichen der Schmelztemperatur T_{S} des reinen Lots L- zum Zeitpunkt t₁ kontinuierlich ab. Mit dem Erreichen der Schmelztemperatur T_{S} setzt der Phasenübergang ein. Das Lot L erstarrt. Während der Dauer des Phasenübergangs bleibt die Temperatur T des Lotes L annähernd konstant. Dies führt dazu, dass der zeitliche Verlauf der Temperatur T_{R}(t) in diesem Bereich einen deutlich ausgeprägten plateauförmigen Abschnitt aufweist, in dem sich die Temperatur in Abhängigkeit von der Zeit bis zum Abschluss des Phasenübergangs praktisch nicht ändert. Der Phasenübergang ist zum Zeitpunkt t₂ abgeschlossen, und die Temperatur T des Lotes L nimmt wieder kontinuierlich ab.

Verunreinigungen im Lot 3 führen unter den gleichen Versuchsbedingungen zu einem gegenüber der Referenzkurve T_{R}(t) in der Regel deutlich veränderten zeitlichen Verlauf der Temperatur T(t) des Lotes 3.

Je nach Art und/oder Umfang der Verunreinigung sind dabei vielfältige Veränderungen möglich. Mögliche Veränderungen sind nachfolgend anhand von zwei Extremfällen aufgezeigt.

Ein Extremfall besteht darin, dass dem reinen Lot L nun eine Verunreinigung zugeführt, die bewirkt, dass das verunreinigte Lot 3 beim Erstarren eine einzige Phase ausbildet, deren Zusammensetzung der Zusammensetzung des verunreinigten Lotes 3 entspricht. Dabei ergibt sich der in Fig. 3 gestrichelt dargestellte zeitliche Verlauf der Temperatur T su(t) während dieses Phasenübergangs. Der grundsätzliche Verlauf ist im Wesentlichen identisch zu dem Verlauf der Referenzkurve T_{R}(t). Die Verunreinigung bewirkt jedoch eine Veränderung der Schmelztemperatur, hier eine Absenkung der Schmelztemperatur von T_{S} auf T_{SU}, die anhand der veränderten Lage des plateauförmigen Abschnitts des Temperaturverlaufs T_{SU}(t) gegenüber dem plateauförmigen Abschnitt der Referenzkurve T_{R}(t) ablesbar ist.

Ein weiterer Extremfall tritt auf, wenn dem reinen Lot mindestens ein weiteres Material in einer Menge zugeführt, die bewirkt, dass das resultierende Lot beim Erstarren zwei mengenmäßig nahezu gleichwertige Phasen α und β ausbildet, die unterschiedliche Schmelztemperaturen T_{α} und T_{β} aufweisen. In diesem Fall ergibt sich der in Fig. 3 gepunktet dargestellte zeitliche Verlauf der Temperatur T_{αβ}(t).

Die Temperatur T_{αβ}(t) des Lotes nimmt bis zum Erreichen der höheren der beiden Schmelztemperaturen, hier T_{α}, kontinuierlich ab. Mit dem Erreichen der Schmelztemperatur T_{α} setzt ein erster Phasenübergang ein, bei dem ein Teil des Lotes in der α Phase erstarrt. Während der Dauer dieses Phasenübergangs bleibt die Temperatur T des Lotes annähernd konstant. Dies führt dazu, dass der zeitliche Verlauf der Temperatur T_{αβ}(t) in diesem Bereich einen deutlich ausgeprägten plateauförmigen Abschnitt aufweist, in dem sich die Temperatur in Abhängigkeit von der Zeit bis zum Abschluss des ersten Phasenübergangs praktisch nicht ändert. Der Phasenübergang ist zum Zeitpunkt t₃ abgeschlossen, und die Temperatur des Lotes nimmt wieder kontinuierlich ab, bis zum Zeitpunkt t₄ der niedrigere der beiden Schmelzpunkte, hier T_{β,} erreicht wird.

Mit dem Erreichen der niedrigeren Schmelztemperatur T_{β} setzt ein zweiter Phasenübergang ein, bei dem der verbliebene Teil des Lotes in der β Phase erstarrt. Während der Dauer dieses Phasenübergangs bleibt die Temperatur des Lotes wieder annähernd konstant. Dies führt dazu, dass der zeitliche Verlauf der Temperatur T_{αβ}(t) in diesem Bereich einen zweiten plateauförmigen Abschnitt aufweist, in dem sich die Temperatur T _{αβ}(t) in Abhängigkeit von der Zeit bis zum Abschluss des zweiten Phasenübergangs praktisch nicht ändert. Im Anschluss an diesen zum Zeitpunkt t₅ abgeschlossenen zweiten Phasenübergang nimmt die Temperatur T_{αβ}(t) des Lotes wieder kontinuierlich ab. Je nach Art und Umfang des zugefügten Materials können natürlich auch drei oder mehr Phasen ausgebildet werden, die bei unterschiedlichen Schmelztemperaturen erstarren.

Die Dauer der einzelnen Phasenübergänge ist bei gleichen Abkühlungsbedingungen abhängig von der anteiligen Menge des in der jeweiligen Phase erstarrenden Materials.

In Lotbädern bilden die Verunreinigungen nur einen mengenmäßig sehr geringen Anteil an der Lotmenge, z.B. in der Größenordnung von 0,01 bis 0,2 Atom %. Bei diesen geringen Mengen erstarrt typischer Weise fast die gesamte Lotmenge in einer einzigen Phase bei einer für die Verunreinigung charakteristischen Schmelztemperatur. Dies ist auch dann der Fall, wenn insgesamt zwei oder mehr Phasen ausgebildet werden, die im zeitlichen Verlauf jeweils zur Ausbildung eines plateauförmigen Abschnitts führen. Da die Dauer der einzelnen Phasenübergänge abhängig von der anteiligen Menge des in der jeweiligen Phase erstarrenden Materials ist, nimmt der Phasenübergang in dem fast die gesamte Lotmenge erstarrt das größte Zeitfenster in dem zeitlichen Verlauf der Temperatur ein. Weitere Phasenübergänge bei denen gegebenenfalls die übrigen anteilsmäßig sehr geringen Restmengen erstarren, finden demgegenüber in sehr engen Zeitfenstern statt. Der zeitliche Verlauf der Temperatur zeigt damit bei in Lotbädern typischer Weise auftretenden Verunreinigungsgraden im wesentlichen den in Fig. 3 gestrichelt eingezeichneten Verlauf. D.h. zumindest ein mengenmäßig größter Anteil des Lotes erstarrt in einem einzigen Phasenübergang in einer einzigen Phase. Dies spiegelt sich in dem ausgeprägten den zeitlichen Verlauf der Temperatur charakterisierenden plateauförmigen Abschnitt wieder.

Selbst geringe Mengen von Verunreinigungen, insb. von 0, 1 Atom % und mehr haben in der Regel bereits deutlich messbare Auswirkungen auf den zeitlichen Verlauf der Temperatur T(t) des Lotes 3 während dieses Phasenübergangs. So führt beispielsweise eine Verunreinigung eines eutektischen Zinn/Silber Lotes mit 1 Atom% Blei zu einem Abfall der Schmelztemperatur um 4°C. Während das reine Zinn/Silber Lot einen Schmelzpunkt von 221°C aufweist beträgt der Schmelzpunkt des mit 1 Atom % verunreinigten Lots nur noch 217°C. Damit verschiebt sich der zugehörige plateauförmige Abschnitt um 4°C nach unten.

Aufgrund dieses deutlich messbaren Effektes eignet sich der zeitliche Verlauf der Temperatur T(t) während des Phasenübergangs hervorragend zur Erkennung von Verunreinigungen.

Erfindungsgemäß wird daher zur Erkennung von in einem reinen Lot L enthaltenen Verunreinigungen, derart Verfahren, dass der zeitlicher Verlauf der Temperatur T(t) des Lotes 3 während eines Abkühl- oder eines Aufheizvorganges in einem Temperaturbereich gemessen wird, indem dieser Phasenübergang des Lotes 3 stattfindet. Anschließend wird der zeitliche Verlauf der gemessenen Temperatur T(t) und/oder eine daraus abgeleitete Kenngröße K mit dem zeitlichen Verlauf einer mit dem reinen Lot L aufgenommenen Referenzkurve T_{R}(t), und/oder der entsprechenden Kenngröße K_{R} des reinen Lotes L verglichen, und es wird anhand des Vergleichs eine gegebenenfalls zwischen dem gemessenen zeitlichen Verlauf der Temperatur T(t) und der Referenzkurve T_{R}(t) und/oder zwischen der Kenngröße K und der Referenzkenngröße K_{R} bestehende Abweichung Δ abgeleitet. Dabei wird die Referenzkurve T_{R}(t) unter den gleichen äußeren Bedingungen aufgenommen, unter denen nachfolgend auch das Verfahren zur Erkennung der Verunreinigungen ausgeführt wird. Besteht eine von Null verschiedene Abweichung Δ, so wird das Lot 3 als verunreinigt erkannt.

Dabei können die Verunreinigungen je nach Art, Umfang und Zusammensetzung sehr komplexe Auswirkungen auf das beschriebene Temperaturverhalten haben. Dies hat zur Folge, dass zwar jede bestehende Abweichung auf eine Verunreinigung zurückzuführen ist, der Umkehrschluss dagegen jedoch nicht immer richtig sein muss. Das Fehlen einer messbaren Abweichung bedeutet nicht zwangsläufig, dass keine Verunreinigung vorliegt. Dies kann z.B. dann der Fall sein, wenn einzelne Komponenten der Verunreinigung gegenläufige Auswirkungen auf das Temperaturverhalten haben, die sich gegenseitig aufheben.

Vorzugsweise wird die Referenzkurve T_{R}(t) im Rahmen einer Inbetriebnahme der oben beschriebenen erfindungsgemäßen Lötanlagen vorgenommen. Hierzu wird das Lotbad 1 bei der Inbetriebnahme mit dem reinen Lot L befüllt.

Anschließend wird mittels der Vorrichtung zur Erkennung der Verunreinigungen der zeitliche Verlauf der Temperatur T(t) des reinen Lotes L während eines Abkühl- oder eines Aufheizvorganges in einem Temperaturbereich gemessen, indem der Phasenübergang des reinen Lotes L stattfindet. Der zeitliche Verlauf der gemessenen Temperatur T(t) wird als Referenzkurve T_{R}(t) in einem der Auswerteeinheit 35 zugänglichen Speicher 37 abgespeichert. Alternativ oder zusätzlich hierzu kann aus dem zeitlichen Verlauf der Temperatur T(t) eine Kenngröße K des reinen Lots L abgeleitet und als Referenzkenngröße K_{R} des reinen Lots L in einem der Auswerteeinheit 35 zugänglichen Speicher 37 abgespeichert werden. Als Referenzkenngröße K_{R} eignet sich beispielsweise diejenige Temperatur, bei der der zeitliche Verlauf den ausgeprägten plateauförmigen Abschnitt aufweist. Diese Kenngröße K entspricht der Schmelztemperatur T_{S} des reinen Lotes 3. Sie kann beispielsweise anhand von Algorithmen ermittelt werden, die die Steigung des zeitlichen Verlaufs der gemessenen Temperatur ermitteln, und von einem in der Auswerteinheit 35 enthaltenen Mikroprozessor 39 ausgeführt werden.

Die Referenzkurve wird, bei dem in Fig. 1 dargestellten Ausführungsbeispiel, beispielsweise mittels des Temperatursensors 17 oder des Temperatursensors 19 aufgenommen, während das frisch befüllte Lotbad 1 aufgeheizt wird. Das Aufheizen des Lotes L auf die Betriebstemperatur, bei der das Lotbad 1 nachfolgend betrieben wird, ist ein ohnehin notwendiger Vorgang, der stets in gleicher Weise vorgenommen wird. Der zeitliche Verlauf der während des Aufheizens gemessenen Temperatur wird als Referenzkurve in einem der Auswerteeinheit 35 zugänglichen Speicher 37 abgespeichert. Alternativ oder zusätzlich hierzu kann aus dem zeitlichen Verlauf der Temperatur T(t) die oben beschriebene Referenzkenngröße des reinen Lots L abgeleitet und in einem der Auswerteeinheit 35 zugänglichen Speicher 37 abgespeichert werden.

Dieses Vorgehen bietet den Vorteil, dass die Aufnahme der Referenzkurve bzw. die Ableitung der Referenzkenngröße während eines ohnehin erforderlichen Aufheizvorganges ausgeführt werden. Es ist kein zusätzlicher Arbeitsgang erforderlich. Allerdings bedeutet diese Vorgehensweise, dass die spätere Erkennung von Verunreinigungen auch nur dann ausgeführt werden kann, wenn das abgekühlte Lotbad 1 erneut unter den gleichen Bedingungen aufgeheizt wird. Dieses Verfahren ist zum Beispiel dann sinnvoll, wenn das Lotbad 1 fertigungs- oder personal-bedingt regelmäßig, z.B. täglich, abgeschaltet wird.

Alternativ hierzu kann, bei dem in Fig. 1 dargestellten Ausführungsbeispiel die Temperatur des reinen Lotes mittels des Temperatursensors 17 oder des Temperatursensors 19 gemessen werden, während das aufgeheizte Lotbad 1 abkühlt. In dem Fall wird das frisch befüllte Lotbad 1 vorab vorzugsweise auf die Löttemperatur T_{L} aufgeheizt und anschließend wieder abgekühlt. Der zeitliche Verlauf der Temperatur wird während des Abkühlens gemessenen und als Referenzkurve T_{R}(t) in einem der Auswerteeinheit 35 zugänglichen Speicher 37 abgespeichert und/oder es wird anhand der Referenzkurve T_{R}(t) die Referenzkenngröße K_{R} abgeleitet und in dem der Auswerteeinheit 35 zugänglichen Speicher 37 abgespeichert.

Auch bei dieser Vorgehensweise, kann die spätere Erkennung von Verunreinigungen nur dann ausgeführt werden kann, wenn das aufgeheizte Lotbad 1 erneut unter den gleichen Bedingungen abkühlt.

Auch bei dem in Fig. 2 dargestellten Ausführungsbeispiel wird die Referenzkurve T_{R}(t) vorzugsweise im Rahmen einer Inbetriebnahme der oben beschriebenen erfindungsgemäßen Lötanlage vorgenommen. Hierzu wird das Lotbad 1 bei der Inbetriebnahme mit dem reinen Lot L befüllt und das Lot L wird auf dessen Löttemperatur T_{L} aufgeheizt.

Anschließend wird mittels der Entnahmevorrichtung 21, eine vorgegebenen Menge flüssigen Lotes L aus dem Lotbad 1 entnommen, in den Behälter 29 gefüllt und es wird der zeitliche Verlauf der Temperatur des entnommenen Lotes L während eines Abkühl- oder Aufheizvorganges in dem Temperaturbereich aufgenommen, indem der Phasenübergang des reinen Lotes L stattfindet.

Dabei kann der Behälter 29 permanent an die für das Lotbad 1 vorgesehene, hier nicht dargestellte, Heizung angekoppelt sein, so dass der Behälter 29 und dessen Inhalt zusammen mit dem Lot 3 im Lötbad 1 aufheizt wird, auf der Löttemperatur T_{L} gehalten wird, bzw. nach dem Ausschalten der Heizung abkühlt. Die Aufnahme der Referenzkurve T_{R}(t) bzw. die Ableitung der Kenngröße K_{R} erfolgt in dem Fall auf die gleiche Weise, wie sie oben bereits anhand des in Fig. 1 dargestellten Ausführungsbeispiel beschrieben wurde. Der einzige Unterschied besteht darin, dass anstelle der Temperatur T des Lots L im Lotbad 1 die Temperatur des Lots L im Behälter 29 gemessen wird.

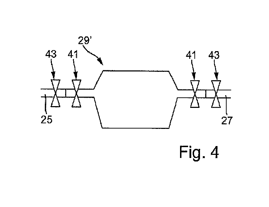

Allen zuvor beschriebenen Varianten ist gemeinsam, dass es zur Erkennung der Verunreinigungen erforderlich ist, den Lötbetrieb zu unterbrechen. Sollte dies aus fertigungs- oder ablauftechnischen nicht gewünscht sein, so lässt sich dies dadurch vermeiden, dass eine Vorrichtung vorgesehen wird, die es erlaubt, einen entsprechend ausgebildeten Behälter 29', während des Betriebs aus der Lötanlage zu entnehmen, so dass dieser samt Inhalt unabhängig von der Temperatur des Lötbades 1 abkühlen kann. Ein Beispiel für einen solchen Behälter 29' ist in Fig. 4 dargestellt. Er ist vollständig abgeschlossen, und weist einlassseitig und auslassseitig jeweils einen verschließbaren Anschluss 41 auf, der an entsprechende ebenfalls verschließbare Anschlüsse 43 der Zuleitung 25 und der Ableitung 27 anschließbar ist.

Die Aufnahme der Referenzkurve T_{R}(t) bzw. die Ableitung der Kenngröße K_{R} erfolgt auch hier vorzugsweise im Rahmen der Inbetriebnahme unmittelbar nachdem das Lotbad 1 mit frischem Lot L befüllt wurde. Hierzu wird das Lot L im Lötbad 1 auf die Löttemperatur T_{L} aufgeheizt und der Behälter 29' mit flüssigem Lot L befüllt. Anschließend werden die verschließbaren Anschlüsse 41 des Behälters 29' und die verschließbaren Anschlüsse 43 der Zuleitung 25 und der Ableitung 27 verschlossen und der Behälter 29' aus der Lötanlage entnommen.

Der Behälter 29' und das darin enthaltene Lot L werden nun nicht mehr durch die Heizung der Lötanlage beheizt und das Lot L kühlt ab. Während dieses Abkühlvorgangs wird die Referenzkurve T_{R}(t) aufgezeichnet und gegebenenfalls die zugehörige Kenngröße K_{R} daraus abgeleitet.

Alternativ könnte man das Lot im Behälter 29' abkühlen lassen, es anschließend wieder aufheizen und die Referenzkurve während des Aufheizvorganges aufnehmen. Dies würde jedoch ein zusätzliche externe Heizung erfordern.

Das erfindungsgemäße Verfahren zur Erkennung von Verunreinigungen kann nun jederzeit während des Lötbetriebes durchgeführt werden, indem ein identischer mit dem Temperatursensor 31 ausgestatteter Behälter 29' in den Bypass eingesetzt wird, die Anschlüsse 41, 43 geöffnet werden, der Behälter 29' mit flüssigen Lot 3 aus dem Lötbad 1 befüllt wird, und nach dem Verschließen der Anschlüsse 41, 43 entnommen wird. Es wird auch hier wie oben beschrieben, der zeitliche Verlauf der Temperatur des Lots während des Phasenübergangs aufgezeichnet.

Die eigentliche Erkennung der Verunreinigungen erfolgt dann mittels der Auswerteeinheit 35. Hierzu wird in der Auswerteinheit 35 ein Vergleich des zeitlichen Verlaufs der gemessenen Temperatur T(t) und/oder einer daraus abgeleiteten Kenngröße K des möglicher Weise verunreinigten Lotes 3 mit der Referenzkurve T_{R}(t) und/oder der Referenzkenngröße K_{R} ausgeführt, und anhand des Vergleich eine gegebenenfalls zwischen dem gemessenen zeitlichen Verlauf der Temperatur T(t) und der Referenzkurve T_{R}(t) und/oder der Kenngröße K und der Referenzkenngröße K_{R} bestehende Abweichung Δ abgeleitet. Besteht eine Abweichung Δ, so wird das Lot 3 als verunreinigt erkannt.

Die Abweichung Δ ist beispielsweise die zwischen der gemessenen Temperaturkurve T(t) und der Referenzkurve T_{R}(t) eingeschlossene Fläche. Diese wird vorzugsweise in einem fest vorgegebenen Zeitfenster bestimmt, in dem der Phasenübergang des reinen Lotes L stattfindet. In dem in Fig. 3 dargestellten Beispiel ist das Zeitfenster beispielsweise durch die Anfangszeit t₀ und die Endzeit t₂ begrenzt. Die zwischen der gemessenen Temperaturkurve T_{SU}(t) und der Referenzkurve T_{R}(t) eingeschlossene Fläche ist in Fig. 3 schraffiert.

Alternativ oder zusätzlich hierzu kann eine weitere Abweichung anhand einer Kenngröße K ermittelt werden. Als Kenngröße K eignet sich insb. die oben bereits beschriebene Schmelztemperatur des Lotes. Der Schmelzpunkt T_{S} des reinen Lots ist entweder vorab bekannt oder er wird in der Auswerteinheit 35 anhand der Referenzkurve T_{R}(t) abgeleitet. Hierzu wird mittels entsprechender Algorithmen diejenige Temperatur bestimmt, bei der die Referenzkurve T_{R}(t) den ausgeprägten plateauförmigen Abschnitt aufweist. Auf diese Weise wird anhand der gemessenen Temperaturkurve, hier T_{SU}(t), auch die Schmelztemperatur T su des potentiell verunreinigten Lots 3 bestimmt. Anschließend wird die Abweichung Δ' bestimmt, indem die Differenz dieser beiden Schmelztemperaturen T_{S}, T_{SU} gebildet wird. Das Lot 3 wird als verunreinigt erkannt, wenn eine Abweichung Δ' besteht.

Die abgeleiteten Abweichungen Δ, Δ' werden von der Auswerteinheit 35 einer weiteren Auswertung, Verarbeitung und/oder Anzeige zur Verfügung stellt. Hierzu weist die hier dargestellte Auswerteinheit 35 einen Ausgang 45 auf, über den die Abweichung Δ und/oder Δ'und vorzugsweise auch die gemessenen Temperaturverläufe T(t), die Referenzkurve T_{R}(t), sowie die gegebenenfalls ermittelten oder abgespeicherten Kenngrößen K und die Referenzkenngrößen K_{R} einer übergeordneten Einheit, z.B. einem Personal Computer, zur Verfügung stehen. Die Anzeige der Abweichungen Δ, Δ' erfolgt vorzugsweise graphisch mittels eines Displays 47, in dem die gemessenen Temperaturverläufe T(t) und die gegebenenfalls ermittelten Kenngrößen K graphisch zusammen mit der Referenzkurve T_{R}(t) und den entsprechenden Referenzkenngrößen K_{R} des reinen Lots L dargestellt sind.

Vorzugsweise leitet die Vorrichtung zur Erkennung der Verunreinigungen mindestens eine der oben beschriebenen Abweichungen Δ, Δ' ab und vergleicht diese mit einem für die abgeleitete Abweichung Δ,Δ' vorgegebenen Grenzwert. Sollte die Abweichung den vorgegebenen Grenzwert überschreiten, wird das Lot 3 der Lötanlage ausgewechselt.

Dabei kann der Grenzwert ein genereller sicherheitsgerichtet gewählter Grenzwert sein, der völlig unabhängig davon ist, mit welchen Stoffen das Lotbad 1 verunreinigt wurde. So kann beispielsweise eine vorgegebene Änderung der Schmelztemperatur, z.B. um 2°C, oder eine vorgegebene Maximalgröße für die zwischen der Referenzkurve T_{R}(t) und dem gemessenen Temperaturverlauf T(t) eingeschlossene Fläche, generell zum Anlass genommen werden, das Lot 3 im Lotbad 1 zu wechseln. Dies ist zum Beispiel dann sinnvoll, wenn anzunehmen ist, dass das Lotbad 1 regelmäßig mit ständig wechselnden Stoffen verunreinigt wird.

Ist bekannt, mit welchem Stoff das Lotbad 1 verunreinigt wird, so kann in einigen Fällen anhand von weiteren Referenzmessungen ein Maß für den Grad der Verunreinigung abgeleitet werden. Dies ist z.B. dann der Fall, wenn die Verunreinigung aus einem vorbekannten Stoff besteht, der eine mit zunehmendem Verunreinigungsgrad stetig wachsende Veränderung des zeitlichen Verlaufs der Temperatur des Lots 3 während des Phasenübergangs bewirkt. Eine solche stetig wachsende Veränderung ist z.B. ein stetiger Anstieg oder ein stetiger Abfall der Schmelztemperatur in Abhängigkeit vom Verunreinigungsgrad. Der Verunreinigungsgrad bezeichnet dabei den Anteil des Stoffes, mit dem das Lot 3 verunreinigt ist an der Gesamtmenge und kann beispielsweise in Atom % angegeben werden.

Zur Bestimmung des Verunreinigungsgrades wird neben der Referenzkurve T_{R}(t), die mit dem reinen Lot L aufgenommen wurde, mindestens eine weitere Referenzkurven T_{RLx}(t) mit einem Referenzlot Lx mit einem bekannten Verunreinigungsgrad aufgenommen. Die Referenzlote Lx werden beispielsweise hergestellt, indem einer bekannten Menge des reinen Lots L eine bekannte Menge des jeweiligen Stoffes als Verunreinigung beigefügt werden.

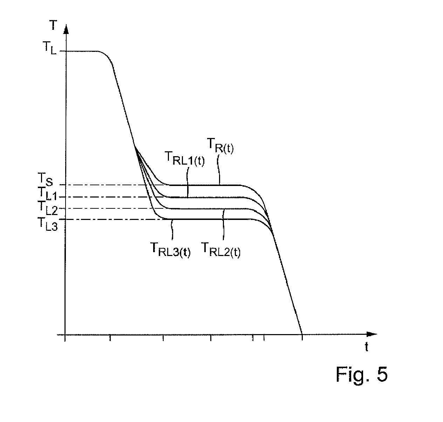

Fig. 5 zeigt Referenzkurven T_{R}(t), T_{RL1}(t), T_{RL2}(t), T_{RL3}(t) für ein Beispiellot. Die Referenzkurve T_{R}(t) zeigt den zeitlichen Verlauf der Temperatur des reinen Lots L während des Phasenübergangs. Die Referenzkurve T_{RL1}(t) zeigt den unter den gleichen Bedingungen im gleichen Temperaturbereich aufgenommenen zeitlichen Verlauf der Temperatur des Referenzlots L1, das beispielsweise 0,08 Atom % des vorbekannten Stoffes, z.B. Blei, enthält. Die Referenzkurve T_{RL2}(t) zeigt den entsprechenden Verlauf der Referenzlots L2, das 0,10 Atom % des vorbekannten Stoffes enthält, und die Referenzkurve T_{RL3}(t) den entsprechenden Verlauf des Referenzlots L3, das 0,12 Atom % des vorbekannten Stoffes enthält.

Genau wie für das reine Lot L, lassen sich auch für die Referenzlote Lx Referenzkenngrößen K_{Rx} ableiten, die nachfolgend zur Bestimmung des Grades der Verunreinigung herangezogen werden können. Hierzu eignen sich besonders gut die Schmelztemperaturen, bei denen zumindest der wesentliche Teil der Referenzlote Lx erstarren bzw. schmelzen. In dem dargestellten Ausführungsbeispiel sinkt die Schmelztemperatur T_{Lx} der Referenzlote Lₓ mit zunehmendem Verunreinigungsgrad ab.

Anhand dieser Referenzmessungen wird der Grad der Verunreinigung des Lotes 3 mit dem vorbekannten Stoff, der sich im Betrieb im Lotbad 1 angereichert hat, ermittelt, indem der zeitlichen Verlauf der gemessenen Temperatur T(t) und/oder eine daraus abgeleitete Kenngröße K des Lots 3 mit dem zeitlichen Verlauf der Referenzkurven T_{R}(t), T_{RL1}(t), T_{RL2}(t), T_{RL3}(t) und/oder den entsprechenden Referenzkenngrößen K_{R}, K_{R1}, K_{R2}, K_{R3} der Referenzlote Lₓ verglichen wird, und anhand des Vergleichs eine vom Grad der Verunreinigung des Lotes 3 mit dem vorbekannten Stoff abhängige Abweichung Δ abgeleitet wird. Diese wird einer weiteren Auswertung, Verarbeitung und/oder Anzeige zur Verfügung gestellt.

Der Grad der Verunreinigung kann hierzu anhand des zeitlichen Verlaufs der gemessenen Temperatur T(t) durch einen Vergleich mit den Referenzkurven T_{R}(t), T_{RL1}(t), T_{RL2}(t), T_{RL3}(t) bestimmt werden, indem Beispielsweise diejenigen beiden Referenzkurven ermittelt werden, die dem gemessenen Verlauf T(t) am ähnlichsten sind. Ein Maß hierfür sind beispielsweise die zwischen der gemessenen Verlaufskurve T(t) und den jeweiligen Referenzkurven T_{R}(t), T_{RL1}(t), T_{RL2}(t), T_{RL3}(t) eingeschlossenen Flächen. Hieraus ergibt sich dann ein Grad der Verunreinigung, der zwischen den bekannten Verunreinigungsgraden der beiden Referenzlote, mit denen die jeweiligen der gemessenen Verlaufskurve T(t) benachbarten Referenzkurven aufgenommen wurden, liegt. Hierdurch ist ein Bereich ableitbar, in dem der gesuchte Verunreinigungsgrad liegt. Eine genauere Bestimmung des Verunreinigungsgrades kann quantitativ durch Interpolation ermittelt werden. Hierzu werden beispielsweise die zwischen der gemessenen Verlaufskurve und den beiden benachbarten Referenzkurven eingeschlossenen Flächen berechnet und zu den jeweiligen Verunreinigungsgraden der beiden Referenzkurven ins Verhältnis gesetzt.

Alternativ oder zusätzlich hierzu kann der Verunreinigungsgrad quantitativ anhand einer abgeleiteten Kenngröße K ermittelt werden. Vorzugsweise wird hierzu die Schmelztemperatur herangezogen, die anhand des plateauförmigen Abschnitts des zeitlichen Verlaufs der Temperatur T(t) des potentiell verunreinigten Lots 3 wie oben beschrieben ermittelt werden.

Die für das potentiell verunreinigte Lot 3 ermittelte Schmelztemperatur wird dann mit den als Referenzkenngrößen K_{Rx} abgespeicherten Schmelztemperaturen T_{Sx} verglichen und anhand der sich ergebenden Abweichungen Δ zwischen den Schmelztemperaturen der gesuchte Verunreinigungsgrad ermittelt. Auch hier kann der gesuchte Verunreinigungsgrad durch Interpolation quantitativ genauer bestimmt werden.

Hierdurch ist es insb. möglich einen gewünschten oder vorgegebenen Grenzwert für den Verunreinigungsgrad mit dem vorbekannten Stoff einzuhalten. Dies ist beispielsweise für die Einhaltung der für die Bleikonzentration in der RoHS Richtlinie vorgegebenen Grenzwerte relevant. Hierzu wird anhand der Referenzkurven T_{R}(t), T_{RL1}(t), T_{RL2}(t), T _{RL3}(t) ein Grenzwert für die Schmelztemperatur des verunreinigten Lotes ermittelt, der nicht unterschritten werden darf. Die Überwachung der Einhaltung dieses Grenzwertes erfolgt dann erfindungsgemäß, indem die Schmelztemperatur des Lotes 3 im Lotbad 1 auf die beschriebene Weise ermittelt wird, und überprüft wird, ob dieser unterhalb des anhand der Referenzmessungen abgeleiteten Grenzwertes liegt.

Die erfindungsgemäßen Verfahren zur Erkennung von Verunreinigungen bzw. zur Bestimmung des Grades der Verunreinigung können regelmäßig, z.B. täglich, oder bedarfsabhängig ausgeführt werden. Die bedarfsabhängige Überprüfung erfolgt beispielsweise anhand der ermittelten Abweichungen Δ, Δ' oder des ermittelten Verunreinigungsgrades, indem die Überprüfungen umso häufiger ausgeführt werden, je näher die ermittelte Abweichung bzw. die ermittelten Abweichungen oder der ermittelte Verunreinigungsgrad an einem hierfür vorgegebenen Grenzwert liegen.

Vorzugsweise weist die Lötanlage eine zusätzliche Anzeige auf, die das Überschreiten des Grenzwertes bzw. dessen Einhaltung anzeigt. Dies kann beispielsweise eine an die Auswerteinheit 35 angeschlossene Anzeige 49 sein, die eine rote und eine grüne Leuchtdiode umfasst. Diese wird derart angesteuert, dass die grüne Leuchtdiode leuchtet solange der Grenzwert eingehalten wird. Wird der Grenzwert überschritten, so schaltet die Auswerteinheit 35 die rote Leuchtdiode ein und die grüne wird ausgeschaltet.

**Tabelle 1**

| | |
|---|---|
| 1 | Lotbad |
| 3 | Lot |
| 5 | Lotführung |
| 7 | Lotwelle |
| 9 | zu lötende Baugruppe |
| 11 | Baugruppenführung |
| 13 | Leiterplatte |
| 15 | elektronisches Bauteil |
| 17 | Temperatursensor |
| 19 | Temperatursensor |
| 21 | Entnahmevorrichtung |
| 23 | Bypass |
| 25 | Zuleitung |
| 27 | Ableitung |
| 29 | Behälter |
| 31 | Temperatursensor |
| 33 | Fühler |
| 35 | Auswerteinheit |
| 37 | Speicher |
| 39 | Mikroprozessor |
| 41 | verschließbarer Anschluss |
| 43 | verschließbarer Anschluss |
| 45 | Ausgang |
| 47 | Display |
| 49 | Anzeige |

## Patentansprüche

1. Lötanlage mit einem Lotbad (1), das im Lötbetrieb ein flüssiges Lot (3) enthält, das Verunreinigungen enthalten kann, die sich im Lötbetrieb in dem zunächst reinen Lot (L) angereichert haben, und
- einer Vorrichtung zur Erkennung dieser Verunreinigungen, mit
-- einem Temperatursensor (17, 19, 31), der dazu dient, die Temperatur des Lots (3) während eines Abkühl- oder eines Aufheizvorganges in einem Temperaturbereich zu messen, indem ein Phasenübergang des Lots (3) stattfindet, bei dem mindestens ein mengenmäßig größter Teil des Lots (3) erstarrt oder schmilzt, und
-- einer Auswerteeinheit (35), die den zeitlichen Verlauf der gemessenen Temperatur (T(t)) und/oder eine daraus abgeleitete Kenngröße (K) mit dem zeitlichen Verlauf einer mit dem reinen Lot (L) unter den gleichen Bedingungen aufgenommenen Referenzkurve (T_{R}(t)), die den zeitlichen Verlauf der Temperatur des reinen Lots (L) während des Abkühl- oder des Aufheizvorganges in diesem Temperaturbereich, indem auch der Phasenübergang des reinen Lots (L) stattfindet, wiedergibt, und/oder der entsprechenden Referenzkenngröße (K_{R}) des reinen Lotes (L) vergleicht, eine gegebenenfalls bestehende Abweichung (Δ, Δ') bestimmt, und das Lot (3) als verunreinigt erkennt, wenn eine Abweichung (Δ, Δ') besteht.

2. Lötanlage nach Anspruch 1, bei der die Vorrichtung zur Erkennung der Verunreinigungen eine Entnahmevorrichtung (21) zur Entnahme einer vorgegebenen Menge flüssigen Lotes (3) aus dem Lotbad (1) und einen Behälter (29, 29') zur Aufnahme des entnommenen Lots (3) aufweist, und der Temperatursensor (31) derart angeordnet ist, dass er die Temperatur des Lots (3) in diesem Behälter (29, 29') misst.

3. Lötanlage nach Anspruch 1, bei der der Temperatursensor (17, 19) derart angeordnet ist, dass er die Temperatur des Lots (3) im Lotbad (1) misst.

4. Lötanlage nach Anspruch 1, bei der
- die Kenngröße (K) diejenige Temperatur ist, bei der der zeitliche Verlauf der gemessenen Temperatur (T(t)) einen plateauförmigen Abschnitt aufweist,
- die Referenzkenngröße (K_{R}) die Schmelztemperatur (T_{S}) des reinen Lots (L) ist, und
- die abgeleitete Abweichung (Δ) eine Differenz zwischen der Kenngröße (K) und der Referenzkenngröße (K_{R}) ist.

5. Verfahren zur Erkennung von in einem Lot (3) enthaltenen Verunreinigungen, bei dem
- ein zeitlicher Verlauf einer Temperatur (T(t)) des Lotes (3) während eines Abkühl- oder eines Aufheizvorganges in einem Temperaturbereich gemessen wird, indem ein Phasenübergang des Lots (3) stattfindet, bei dem mindestens ein mengenmäßig größter Teil des Lots (3) erstarrt oder schmilzt, und- der zeitlichen Verlauf der gemessenen Temperatur (T(t)) und/oder eine daraus abgeleitete Kenngröße (K) mit dem zeitlichen Verlauf einer mit dem reinen Lot (L) aufgenommenen Referenzkurve (T_{R}(t)), und/oder der entsprechenden Referenzkenngröße (K_{R}) des reinen Lotes (L) verglichenwird, eine gegebenenfalls bestehende Abweichung (Δ, Δ') bestimmt wird, und das Lot als verunreinigt erkannt wird, wenn der Vergleich eine Abweichung (Δ, Δ') ergibt.

6. Verfahren nach Anspruch 5, bei dem
- die Kenngröße (K) diejenige Temperatur ist, bei der der zeitliche Verlauf der gemessenen Temperatur (T(t)) einen plateauförmigen Abschnitt aufweist,
- die Referenzkenngröße (K_{R}) die Schmelztemperatur (T_{S}) des reinen Lots (L) ist, und
- die abgeleitete Abweichung (Δ) eine Differenz zwischen der Kenngröße (K) und der Referenzkenngröße (K_{R}) ist.

7. Verfahren zum Betrieb einer Lötanlage gemäß einem der Ansprüche 1 bis 4, bei dem
- das Lotbad (1) bei der Inbetriebnahme mit dem reinen Lot (L) befüllt wird,
- mittels der Vorrichtung zur Erkennung der Verunreinigungen der zeitliche Verlauf der Temperatur (T(t)) des reinen Lotes während eines Abkühl- oder eines Aufheizvorganges in einem Temperaturbereich gemessen wird, indem ein Phasenübergang des reinen Lotes (L) stattfindet, und
- der zeitliche Verlauf der Temperatur als Referenzkurve (T_{R}(t)) in einem der Auswerteeinheit (35) zugänglichen Speicher (37) abgespeichert wird, und/oder
- aus dem zeitlichen Verlauf der Temperatur eine Kenngröße des reinen Lots abgeleitet und als Referenzkenngröße (K_{R}) des reinen Lots in einem der Auswerteeinheit (35) zugänglichen Speicher (37) abgespeichert wird,

8. Verfahren nach Anspruch 7, bei dem das Lot (3) ausgewechselt wird, wenn die Abweichung (Δ,Δ') einen vorgegebenen Grenzwert überschreitet.

9. Lötanlage mit
- einem Lotbad (1), das im Lötbetrieb ein flüssiges Lot (3) enthält, das eine Verunreinigung aus einem vorbekannten Stoff enthalten kann,
-- der sich im Lötbetrieb in dem zunächst reinen Lot (L) angereichert hat, und
-- der eine mit zunehmendem Verunreinigungsgrad stetig wachsende Veränderung des zeitlichen Verlaufs der Temperatur (T(t)) des Lots (3) während eines Abkühl- oder eines Aufheizvorganges in einem Temperaturbereich, indem ein Phasenübergang des Lots stattfindet, bei dem mindestens ein mengenmäßig größter Teil des Lots erstarrt oder schmilzt, bewirkt, und
- einer Vorrichtung zur Erkennung dieser Verunreinigungen, mit
-- einem Temperatursensor (17, 19, 31), der dazu dient, die Temperatur des Lots (3) während eines Abkühl- oder eines Aufheizvorganges in einem Temperaturbereich zu messen, indem ein Phasenübergang des Lots (3) stattfindet, bei dem mindestens ein mengenmäßig größter Teil des Lots (3) erstarrt oder schmilzt, und
-- einer Auswerteeinheit (35),
--- die den zeitlichen Verlauf der gemessenen Temperatur (T(t)) oder eine daraus abgeleitete Kenngröße (K) mit dem zeitlichen Verlauf von Referenzkurven (T_{R}(t), T_{RL1}(t), T_{RL2}(t), T_{RL3}(t)), die den zeitlichen Verlauf der Temperatur von mindestens zwei Referenzloten (L, L1, L2, L3) während des gleichen Abkühl- oder Aufheizvorganges in dem Temperaturbereich, in dem auch die Phasenübergänge der Referenzlote (L, L1, L2, L3) stattfinden, wiedergeben, und/oder aus den Referenzkurven (T_{R}(t), T_{RL1}(t), T_{RL2}(t), T_{RL3}(t)) abgeleiteten Referenzkenngrößen (K_{R}, K_{R1}, K_{R2}, K_{R3}) vergleicht,
--- wobei ein Referenzlot (L) das reine Lot (L) ist, und alle weiteren Referenzlote (L1, L2, L3) Lote mit bekanntem Verunreinigungsgrad sind, die aus dem reinen Lot (L) durch eine Zugabe einer bekannten Menge des vorbekannten Stoffs hergestellt wurden, und
-- die anhand des Vergleichs eine vom Verunreinigungsgrad des Lotes (3) abhängige Abweichung (Δ) ableitet und einer weiteren Auswertung, Verarbeitung und/oder Anzeige zur Verfügung stellt.

10. Verfahren zur Erkennung einer in einem reinen Lot (3) enthaltenen Verunreinigung aus einem vorbekannten Stoff, der eine mit zunehmendem Verunreinigungsgrad stetig wachsende Veränderung des zeitlichen Verlaufs der Temperatur (T(t)) des Lots (3) während eines Abkühl- oder eines Aufheizvorganges in einem Temperaturbereich, indem ein Phasenübergang des Lots (3) stattfindet, bei dem mindestens ein mengenmäßig größter Teil des Lots erstarrt oder schmilzt, bewirkt, bei dem
- ein zeitlicher Verlauf einer Temperatur (T(t)) des Lotes (3) während eines Abkühl- oder eines Aufheizvorganges in einem Temperaturbereich gemessen wird, indem ein Phasenübergang des Lots (3) stattfindet, bei dem mindestens ein mengenmäßig größter Teil des Lots (3) erstarrt oder schmilzt, und
- der zeitlichen Verlauf der gemessenen Temperatur (T(t)) oder eine daraus abgeleitete Kenngröße (K) mit dem zeitlichen Verlauf von Referenzkurven (T_{R} (t), T_{RL1}(t), T_{RL2}(t), T_{RL3}(t)), die den zeitlichen Verlauf der Temperatur von mindestens zwei Referenzloten (L, L1, L2, L3) während des gleichen Abkühl-oder Aufheizvorganges in dem Temperaturbereich, in dem auch die Phasenübergänge der Referenzlote (L, L1, L2, L3) stattfinden, wiedergeben, und/oder aus den Referenzkurven (T_{R}(t), T_{RL1}(t), T_{RL2}(t), T_{RL3}(t)) abgeleiteten Referenzkenngrößen (K_{R}, K_{R1}, K_{R2}, K_{R3}) verglichen wird,
--- wobei ein Referenzlot (L) das reine Lot ist (L), und alle weiteren Referenzlote (L1, L2, L3) Lote mit bekanntem Verunreinigungsgrad sind, die aus dem reinen Lot (L) durch eine Zugabe einer bekannten Menge des vorbekannten Stoffs hergestellt wurden, und
-- anhand des Vergleichs eine vom Verunreinigungsgrad des Lotes (3) abhängige Abweichung (Δ) abgeleitet wird.

11. Verfahren zur Erkennung von in einem Lot (3) angereicherten Verunreinigungen, bei dem
- eine Schmelztemperatur (T_{SU}) des Lots (3) gemessen wird, bei der zumindest ein mengenmäßig größter Teil des Lots (3) erstarrt bzw. schmilzt,
- eine Differenz zwischen der gemessenen Schmelztemperatur (T_{SU}) und der Schmelztemperatur (T_{S}) des reinen Lots gebildet wird, und
- das Lot (3) als verunreinigt erkannt wird, wenn die Differenz (Δ) einen vorgegebenen Grenzwert überschreitet.
